(19) Europäisches Patentamt
European Patent Office
Office européen des brevets

(11) EP 1 614 716 B1

(12) # EUROPEAN PATENT SPECIFICATION

(45) Date of publication and mention of the grant of the patent:
**06.06.2007 Bulletin 2007/23**

(21) Application number: **05014524.2**

(22) Date of filing: **05.07.2005**

(51) Int Cl.:
***C08L 67/02*** (2006.01) ***C08K 3/00*** (2006.01)
***C08K 3/22*** (2006.01) ***H01B 3/42*** (2006.01)
***H01B 7/295*** (2006.01)

(54) **Insulating parts**

Isolationsteile

Parties isolantes

(84) Designated Contracting States:
**AT DE FR GB**

(30) Priority: **07.07.2004 JP 2004200082**

(43) Date of publication of application:
**11.01.2006 Bulletin 2006/02**

(73) Proprietor: **MITSUBISHI ENGINEERING-PLASTICS CORPORATION**
**Tokyo (JP)**

(72) Inventors:
- **Watari, Tatsuya, c/o Mitsubishi -Yawata**
  **Hiratsuka-shi**
  **Kanagawa-ken (JP)**
- **Takise, Osamu, c/o Mitsubishi -Yawata**
  **Hiratsuka-shi**
  **Kanagawa-ken (JP)**
- **Tajiri, Toshiyuki, c/o Mitsubishi -Yawata**
  **Hiratsuka-shi**
  **Kanagawa-ken (JP)**

(74) Representative: **HOFFMANN EITLE**
**Patent- und Rechtsanwälte**
**Arabellastrasse 4**
**81925 München (DE)**

(56) References cited:

| | |
|---|---|
| **EP-A- 0 331 456** | **EP-A- 0 421 307** |
| **EP-A- 0 516 351** | **EP-A- 1 263 000** |
| **EP-A- 1 288 260** | **WO-A-88/00219** |
| **US-A- 4 414 532** | **US-A- 4 421 888** |
| **US-A- 4 521 560** | **US-B1- 6 642 288** |

- **DATABASE WPI Section Ch, Week 199719 Derwent Publications Ltd., London, GB; Class A18, AN 1997-209492 XP002345815 -& JP 09 059475 A (DAINIPPON INK & CHEM INC) 4 March 1997 (1997-03-04)**
- **DATABASE WPI Section Ch, Week 198605 Derwent Publications Ltd., London, GB; Class A14, AN 1986-032016 XP002345816 -& JP 60 252652 A (TORAY IND INC) 13 December 1985 (1985-12-13)**
- **DATABASE WPI Section Ch, Week 200038 Derwent Publications Ltd., London, GB; Class A23, AN 2000-436449 XP002345817 -& JP 2000 154308 A (TORAY IND INC) 6 June 2000 (2000-06-06) & JP 2000 154308 A (TORAY IND INC) 6 June 2000 (2000-06-06)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 614 716 B1

Printed by Jouve, 75001 PARIS (FR)

## Description

BACKGROUND OF THE INVENTION

The present invention relates to the insulating parts comprising polybutylene terephthalate resins and having excellent flame retardancy and electrical insulating properties. More particularly, it relates to the insulating parts molded from polybutylene terephthalate resin compositions having excellent flame retardancy and properties of tracking resistance and also excelling in electrical safety.

The request for electrical safety in electric and electronic parts has been intensified more than ever in recent years. For example, according to the IEC 60335-1 Standards of the International Electrotechnical Commission (IEC) which were revised recently, it is demanded to satisfy the requirements that in the household electrical appliances such as refrigerator and full-automatic washer, regarding the parts of the apparatus operated without attendance of an operator, the materials of the insulating parts supporting the connections through which an electric current exceeding 0.2 A flow during the normal operations and the electrical insulating parts (such as printed circuit boards, terminal blocks, plugs, etc.) positioned at a distance of not more than 3 mm from the said connections should have a glow-wire flammability index (GWFI) of not lower than 850°C and a glow-wire ignition temperature (GWIT) of not lower than 775°C.

Of course, these parts are also demanded to meet the requirements for flame retardancy of UL-94 standard and comparative tracking index (CTI) or proof tracking index (PTI) which have already been applied to the existing similar electric and electronic parts.

Thus, strict regulations are imposed on durability of these parts against ignition and propagation of flame, that is, electrical safety, in addition to their flame retardancy and properties of tracking resistance, and the parts that can meet all of these requirements in a well-balanced manner have been demanded.

Polyester resins, especially polybutylene terephthalate resins (which may hereinafter be abbreviated as PBT resins) are used for many applications such as electrical apparatus parts and machine parts in recent years because of their excellent mechanical, electrical and other properties such as heat resistance. Particularly, as these PBT resins can readily provide high flame retardancy to the products and also excel in mechanical properties, they have come to be used as an insulating material for the parts of electric and electronic apparatuses which are operated without attendance of an operator.

Japanese Patent Application Laid-Open (KOKAI) No. 60-252652 discloses a flame-retarded polyester composition prepared by incorporating poly(halogenated benzyl acrylate), a graft copolymer comprising an $\alpha$-olefin and a glycidyl ester of an $\alpha,\beta$-unsaturated acid in a polyester resin such as a PBT resin, and mentions its excellent flame retardancy, heat resistance and electrical insulating properties beside good mechanical properties. It is also stated in this patent that the flame retarding effect can be enhanced by using antimony trioxide as an auxiliary flame retardant.

The above patent, however, simply mentions mechanical, electrical and automobile parts and gives no description, even no suggestive reference, regarding durability against ignition and propagation of flames (hereinafter referred to as "electrical safety") or the uses where such electrical safety is required. This "electrical safety" is a parameter which is evaluated by a totally different method from flame retardancy of UL-94 standard (hereinafter referred to simply as "flame retardancy") which is generally known as a means for evaluation of flame retardancy. UL-94 flame retardancy indicates the "degree of nonflammability" observed when a sample is brought into contact with burner flames, whereas GWFI and GWIT, as defined in the revised IEC 60335-1 Standards, are the indices for evaluating ignitability at a high temperature by a glow wire, so that these two indices are of quite different nature.

Further, even if a sample is given a classification of V-0, which is the highest rating in the UL-94 Standards, the sample could prove still unsatisfactory in electrical safety, while on the other hand even if a sample is rated as V-2, which is lower than V-0 in classification of flame retardancy, this sample could show high electrical safety, so that it is hardly possible to estimate electrical safety from the teaching of the above patent which merely gives evaluation of UL-94 standard flame retardancy.

There are also known the resin compositions obtained by combining polyhalogenated (meth)acrylic resins and antimony compounds such as antimony trioxide or antimony pentoxide with a polyester resin, and further incorporating a hydrotalcite compound. (See, for example, Japanese Patent Application Laid-Open (KOKAI) No. 9-59475).

Also known is polybutylene naphthalate prepared by combining polyhalogenated benzyl (meth)acrylate and an antimony-based auxiliary flame retardant for improving moisture and heat resistance of flame-retardant PBT resins. (See, for example, Japanese Patent Application Laid-Open (KOKAI) No. 6-41406). In these patent literatures, however, merely evaluation of flame retardancy in UL standard is given, and there is shown neither example of composition which exhibits high enough performance to satisfy the standard tests of GWIT, GWFI, CTI and PTI nor any exemplification of uses where such specific performance is actually required. Also, polybutylene naphthalate lacks in flowability in comparison with PBT resins to present problems in molding, and it also involves problems in insulation.

Japanese Patent Application Laid-Open (KOKAI) No. 11-199784 describes a flame-retardant resin composition prepared by blending a bromine-based flame retardant and a radical forming agent in a thermoplastic resin, and gives

examples of its use where the above-said electrical safety is required. It is mentioned that in order to improve mechanical properties, a glycidyl group-containing copolymer may be incorporated as an elastomer in the composition. In this composition, however, use of a radical forming agent is essential, and it is stated that if antimony trioxide is used instead of this radical forming agent, a large amount of this compound must be used, causing deterioration of mechanical properties of the composition. In this patent, neither evaluation nor even a suggestive description is given on electrical safety.

## SUMMARY OF THE INVENTION

An object of the present invention is to provide the insulating parts comprising a flame-retardant polybutylene terephthalate resin material which can satisfy the requirements for electrical safety in the revised IEC 60335-1 Standards.

As a result of earnest studies for attaining the above object, it has been found that a molding of a composition comprising a bromine-based flame retardant (preferably polyhalogenated benzyl (meth)acrylate), an antimoxy oxide compound (preferably an antimoxy pentoxide-based compound) and a glycidyl group-containing copolymer can provide the insulating parts possessing excellent flame retardancy and satisfying other property requirements, such as those for GWFI, PTI, etc., in the strict standards of electrical apparatus (revised IEC 60335-1 Standards). The products according to the present invention are capable of equally satisfying the property requirements even when a flammable linear polyolefin resin is incorporated in the composition, and in this respect, the present invention is quite a novel revelation.

The present invention has been attained on the basis of the above findings.

In an aspect of the present invention, there is provided an insulating part having a resin molded portion comprising a polybutylene terephthalate resin composition comprising:

(A) 100 parts by weight of a polybutylene terephthalate resin,
(B) 3 to 50 parts by weight of a bromine-based flame retardant,
(C) 1 to 30 parts by weight of at least one compound selected from antimony oxides or double salts of antimony oxides and other metals,
(D) 0.1 to 30 parts by weight of a glycidyl group-containing copolymer comprising an $\alpha$-olefin and an $\alpha,\beta$-unsaturated acid glycidyl ester,
(E) 0 to 30 parts by weight of a linear olefin resin having a molecular weight of 10,000 to 1,000,000, and
(F) 0 to 200 parts by weight of an inorganic filler, said resin molded portion directly supporting the connections through which a rated electric current exceeding 0.2 A flows or positioned within the distance of 3 mm from the said connections.

## DETAILED DESCRIPTION OF THE INVENTION

The polybutylene terephthalate resin (PBT resin) (A) used in the present invention is a resin of a structure in which not less than 50% by mole, preferably not less than 80% by mole, more preferably not less than 95% by mole of the whole dicarboxylic acid moiety is constituted by terephthalic acid, and not less than 50% by weight, preferably not less than 80% by mole, more preferably not less than 95% by mole of the whole diol moiety is constituted by 1,4-butanediol. Intrinsic viscosity of the said PBT resin, when measured at 30°C using a 1,1,2,2-tetrachloroethane/phenol (1/1 in weight ratio) mixed solvent, is usually not less than 0.50, preferably not less than 0.7, with the upper limit thereof being usually 3.0, preferably 1.5. If its intrinsic viscosity is less than 0.50, the produced composition proves low in mechanical strength, while if intrinsic viscosity of the PBT resin is more than 3.0, molding of the produced composition is difficult to carry out. In the present invention, it is possible to use two or more PBT resins differing in intrinsic viscosity.

As other components of the dicarboxylic acid moiety than terephthalic acid, there can be used, either singly or as a combination of two or more, aromatic dicarboxylic acids such as phthalic acid, isophthalic acid, 4,4'-diphenyldicarboxylic acid, 4,4'-diphenyletherdicarboxylic acid, 4,4'-benzophenonedicarboxylic acid, 4,4'-diphenoxyethanedicarboxylic acid, 4,4'-diphenylsulfonedicarboxylic acid and 2,6-naphthalenedicarboxylic acid, alicyclic dicarboxylic acids such as 1,2-cyclohexanedicarboxylic acid, 1,3-cyclohexanedicarboxylic acid and 1,4-cyclohexanedicarboxylic acid, aliphatic dicarboxylic acids such as malonic acid, succinic acid, glutaric acid, adipic acid, pimelic acid, suberic acid, azelaic acid and sebacic acid, and their lower alkyl or glycol esters.

As other components of the diol moiety than 1,4-butanediol, there can be used, either singly or as a combination of two or more, aliphatic diols such as ethylene glycol, diethylene glycol, polyethylene glycol, 1,2-propanediol, 1,3-propanediol, polypropylene glycol, polytetramethylene glycol, dibutylene glycol, 1,5-pentanediol, neopentyl glycol, 1,6-hexanediol and 1,8-octanediol, alicyclic diols such as 1,2-cyclohexanediol, 1,4-cyclohexanediol, 1,1-cyclohexanedimethylol and 1,4-cyclohexanedimethylol, and aromatic diols such as xylylene glycol, 4,4'-dihydroxybiphenyl, 2,2-bis(4-hydroxyphenyl)propane and bis(4-hydroxyphenyl)sulfone.

In the present invention, it is also possible to use as copolymer components, monofunctional substances such

as hydroxycarboxylic acids, e.g. lactic acid, glycolic acid, m-hydroxybenzoic acid, p-hydroxybenzoic acid, 6-hydroxy-2-naphthalenecarboxylic acid and p-β-hydroxyethoxybenzoic acid, and tri- or higher-order polyfunctional substances such as tricarballylic acid, trimellitic acid, trimesic acid, pyromellitic acid, gallic acid, trimethylolethane, trimethylolpropane, glycerol and pentaerythritol.

For producing a polybutylene terephthalate comprising a dicarboxylic acid or a derivative thereof and a diol such as mentioned above, it is possible to use any appropriate method. For example, there are available roughly two types of method: direct polymerization method in which terephthalic acid and 1,4-butanediol are directly esterificated, and ester exchange method using dimethyl terephthalate as the main starting material. These two methods differ in that in the former method, water is produced in the initial phase of esterification reaction, while in the later method, alcohol is produced in the initial phase of ester exchange reaction. Direct esterification reaction is advantageous in terms of material cost.

The polybutylene terephthalate preparation method is roughly divided into batch method and continuous method from the way of supply of the starting materials or the way of extraction of the polymer. It is possible to use a process in which the initial-phase esterification or ester exchange reaction is conducted by a continuous operation and the succeeding polycondensation is carried out by a batchwise operation, or conversely the initial-phase esterification or ester exchange reaction is conducted by a batchwise operation and the succeeding polycondensation is carried out by a continuous operation.

As the bromine-based flame retardant (B) in the composition of the present invention, the aromatic compounds commonly known as a bromine-based flame retardant for resins can be used. Examples of such aromatic compounds include brominated epoxy compound such as epoxy oligomers of tetrabromobisphenol A, polybrominated benzyl(meth) acrylates such as poly(pentabromobenzyl acrylate), polybromophenyl ether, brominated polystyrene, brominated imide compound such as N,N'-ethylene bis(tetrabromophthalimide) (EBTPI) and brominated polycarbonates. Polybrominated benzyl(meth)acrylates such as poly(pentabromobenzyl acrylate), epoxy oligomers of tetrabromobisphenol A and brominated polycarbonates are preferred in view of good thermal stability, Polybrominated benzyl(meth)acrylates such as poly(pentabromobenzyl acrylate) being especially preferred.

The polybrominated benzyl (meth)acrylates preferably used in the present invention is a polymer that can be obtained by polymerizing a bromine-containing benzyl (meth)acrylate singly or copolymerizing two or more types of such (meth)acrylates or copolymerizing the said (meth)acrylate with other vinyl monomers. Bromine atoms are attached to the benzene rings. The number of the bromine atoms attached to the benzene rings is 1 to 5, preferably 4 to 5 per one benzene ring.

Examples of the bromine-containing benzyl acrylates include pentabromobenzyl acrylate, tetrabromobenzyl acrylate, tribromobenzyl acrylate and mixtures thereof. The methacrylates corresponding to the above-mentioned acrylates can be cited as examples of the bromine-containing benzyl methacrylates.

The vinyl monomers usable for copolymerization with a bromine-containing benzyl (meth)acrylate include acrylic acid and its esters such as methyl acrylate, ethyl acrylate, butyl acrylate and benzyl acrylate, methacrylic acid and its esters such as methyl methacrylate, ethyl methacrylate, butyl methacrylate and benzyl methacrylate, styrene, acrylonitrile, unsaturated carboxylic acids such as fumalic acid and maleic acid and anhydrides thereof, vinyl acetate, vinyl chloride and so on. Such a vinyl monomer is usually used in an amount not more than equimolar with, preferably not more than 0.5 time by mole of the bromine-containing benzyl (meth)acrylate.

As the crosslinkable vinyl monomer, xylene diacrylate, xylene dimethacrylate, tetrabromoxylene diacrylate, tetrabromoxylene dimethacrylate, butadiene, isoprene, divinyl benzene and the like can be used. This monomer is used usually in an amount not more than 0.5 time by mole of the bromine-containing benzyl (meth)acrylate.

Polypentabromobenzyl acrylate is preferred for use as the polybrominated benzyl (meth)acrylate because of high bromine content.

The amount of the bromine-based flame retardant incorporated in the composition is 3 to 50 parts by weight, preferably 5 to 22.5 parts by weight, more preferably 10 to 22 parts by weight based on 100 parts by weight of the PBT resin. If its amount incorporated is less than 3 parts by weight, the desired flame retardancy improving effect can not be obtained. Use of this compound in excess of 50 parts by weight tends to impair the mechanical properties of the polybutylene terephthalate resin.

In the present invention, an antimoxy oxide or a double salt of an antimony oxide and other metal (C) is used as auxiliary flame retardant. Antimony oxides such as antimony trioxide ($Sb_2O_3$), antimony tetroxide ($Sb_2O_4$) and antimony pentoxide ($Sb_2O_5$), or antimonates such as sodium antimonite can be used. An antimony pentoxide or double salt of antimony pentoxide and other metal oxide is preferred because of excellent GWIT performance. Especially, use of a double salt of antimony pentoxide and other metal oxide is preferable because such a double salt is easily available and also easy to compound. It is preferable to use, for instance, a double salt represented by the following formula (1) or (2):

$$n(X_2O)\cdot Sb_2O_5\cdot m(H_2O) \qquad (1)$$

$$n(YO) \cdot Sb_2O_5 \cdot m(H_2O) \qquad (2)$$

wherein X is a monovalent alkaline metal element, Y is a divalent alkaline earth metal element, n is a number of 0 to 1.5, and m is a number of 0 to 4, with m and n being decided independently in the respective chemical formulae (1) and (2).

It is more preferable to use a double salt represented by the following formula (3):

$$n(Na_2O) \cdot Sb_2O_5 \qquad (3)$$

wherein n is a number of 0.65 to 1.5.

As X in the above formulae (1), (2) and (3), lithium, sodium, potassium and cesium can be cited as examples, and as Y, calcium, magnesium and barium can be cited. The number n is more than 0, preferably not less than 0.3, more preferably 0.65 to 1.5. When n is less than 0.65, melt viscosity is liable to change because of low desorption rate of adsorbed water. When n is more than 1.5, the intended effect of the auxiliary flame retardant cannot be obtained as the amount of antimony decreases relatively. m is a number of 0 to 4, preferably 0 to 2. When n is more than 4, hydrolysis of PBT may take place. A 1:1 double salt of sodium oxide and antimony pentoxide represented by the formula $Na_2O \cdot Sb_2O_5$ (n=1) is preferred in view of resistance to hydrolysis. Such a double salt is commercially available under the trade name of, for example, NA-1070L from Nissan Chemical Industries Ltd.

As antimony pentoxide (C) in the present invention, it is possible to use two or more of the compounds of the formulae (1) and (2) in admixture. In this case, m and n in the above formulae are decided independently.

The amount of antimony oxide or a double salt of antimony oxide and other metal compounded in the composition is 1 to 30 parts by weight, preferably 5 to 20 parts by weight based on 100 parts by weight of PBT resin. If its amount is less than 1 part by weight, the effect of the compound as an auxiliary flame retardant is not attained, and if its amount exceeds 30 parts by weight, its effect of use is saturated and also mechanical strength of the resin molded products lowers.

The α-olefin (D1) in the glycidyl group-containing copolymer (D) comprising an α-olefin and an α,β-unsaturated glycidyl ester in the present invention may be, for example, ethylene, propylene, butene-1, pentene-1 or the like. Of these, ethylene is especially preferred.

The α,β-unsaturated glycidyl ester (D2) in the component (D) is a compound represented by the following formula (4), such as, for example, glycidyl acrylate, glycidyl methacrylate, glycidyl ethacrylate and diglycidyl itaconate. Of these, glycidyl acrylate and glycidyl methacrylate are especially preferred. These compounds may be used alone or as a mixture of two or more.

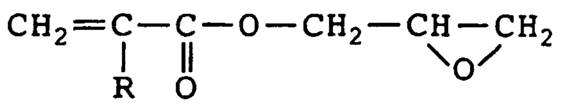

(4)

wherein R is hydrogen, lower alkyl or lower alkyl substituted with glycidyl ester.

The rate of copolymerization of α,β-unsaturated glycidyl ester (D2) in the component (D) is preferably 0.5 to 40% by weight of the total of (D1) and (D2). If the rate of copolymerization is less than 0.5% by weight, the polyolefin dispersion improving effect is unsatisfactory even if the component (D) is incorporated. If the copolymerization rate exceeds 40% by weight, the resin composition shows low flowability in molding thereof. The preferred range of copolymerization rate of α,β-unsaturated glycidyl ester (D2) is 1 to 30% by weight, especially 2 to 20% by weight.

In the component (D), another unsaturated monomer (D3) copolymerizable with the said α-olefin (D1) and α,β-unsaturated glycidyl ester (D2) may be further copolymerized in an amount less than 40% by weight of the total of (D1), (D2) and (D3). Examples of such other unsaturated monomer (D3) are (meth)acrylic esters such as methyl (meth)acrylate, ethyl (meth)acrylate, propyl (meth)acrylate and butyl (meth)acrylate; vinyl esters such as vinyl acetate and vinyl propionate; acrylonitrile, styrene, carbon monoxide, and maleic anhydride.

The component (D) can be easily produced by copolymerizing an α-olefin (D1) and an α,β-unsaturated glycidyl ester (D2), if necessary with other copolymerizable unsaturated monomer (D3), by a standard random or graft copolymerization method. The copolymerization reaction is usually carried out in an inert solvent such as benzene, chloroform, carbon tetrachloride or the like.

The said glycidyl group-containing copolymer (D) is preferably a resin having compatibility with polybutylene terephthalate resins and linear polyolefins and also having a function to uniformly disperse polyolefins.

As preferred examples of the component (D), ethylene-glycidyl methacrylate copolymer, ethylene-propylene-glycidyl methacrylate copolymer, ethylene-glycidyl methacrylate-carbon monoxide copolymer, ethylene-glycidyl methacrylate-vinyl acetate copolymer and ethylene-glycidyl methacrylate-methyl methacrylate copolymer can be mentioned.

Of these, ethylene-glycidyl methacrylate copolymer and ethylene-glycidyl methacrylate-methyl methacrylate are especially preferred. A typical example of commercial products of such copolymers is "Bondfast" (registered trademark) produced and sold by Sumitomo Chemical Co., Ltd.

The component (D) is compounded in an amount of 0.1 to 30 parts by weight, preferably 0.2 to 20 parts by weight based on 100 parts by weight of the polybutylene terephthalate resin (A).

Compounding of the component (D) in the above-defined amount range in the present invention is based on the new finding that it is not only effective for uniformly dispersing the linear polyolefin resin (E) in PBT, but also contributes to improving the electrical safety factors such as proof tracking index (PTI), glow-wire flammability index (GWFI) and glow-wire ignition temperature (GWIT), either when the component (E) is incorporated or not. If the compounded amount of the glycidyl group-containing copolymer (D) is less than 0.1 part by weight, the GWIT and PTI improving effect is unsatisfactory, and also in case where a linear olefin resin (E) is incorporated, its dispersing effect is low, adversely affecting appearance of the molded products. If the compounded amount of the component (D) is more than 30 parts by weight, melt viscosity of the produced composition elevates to cause troubles in compounding and molding.

The glycidyl group-containing copolymer (D) per se is preferably high in content in view of its GWIT and PTI improving effect, but there are certain restrictions on its content from the viewpoint of molding properties. It is therefore preferable to use a glycidyl-containing copolymer (D) in combination with a linear polyolefin resin, and in this case, the glycidyl-containing copolymer (D)/linear polyolefin resin (E) ratio is preferably adjusted to (D)/(E) = 0.05 to 4.0, more preferably 0.1 to 3.0.

The linear polyolefin resin (E) used in the present invention is a polyolefin with an average molecular weight of 10,000 to 1,000,000 which has substantially no side chains. The so-called high-pressure-processed (low density) polyethylenes with many side chains and the ultra-high-molecular-weight polyethylenes having a molecular weight of over 1,000,000 are unsuited for use in the present invention as they fail to show good compatibility, tend to cause defective appearance of the molded products and also lower GWIT.

The polyolefins having a high PTI and GWIT improving effect are those of high crystallizability, and for instance high-density polyethylenes or homopolypropylenes, especially high-density polyethylenes having a specific gravity of not less than 0.94 are preferred. It is to be noted, however, that if the molecular weight is too low, it is difficult to maintain mechanical strength, and also dripping becomes serious during combustion. The acceptable range of molecular weight of these polyolefins is 10,000 to 1,000,000, preferably 20,000 to 400,000, as measured in terms of viscosity-average molecular weight according to the ASTM D2857 method. In case of a composition in which a fibrous reinforcement such as glass fiber is incorporated, when the polyolefin molecular weight is raised, damage to the fibers in melt mixing is enlarged to cause a risk of reducing mechanical strength of the composition, so that the molecular weight in the range of 20,000 to 100,000 is preferred. Generally, polyolefins with a molecular weight of 10,000 to 100,000 are sold for injection or extrusion molding while those of a molecular weight in the range of 100,000 to 1,000,000 are offered for forming inflation films. Therefore, a proper polyolefin may be selected from these commercially sold products.

Usually, in a flammability test, when combustion starts at a part of the surface of the test piece, the flames spread vehemently with this part as the starting point, and the flame retarding effect is lowered. Thus, very high uniformity is required for the surface of the molded products to possess. Therefore, flame retardancy is not improved unless the linear olefin resin (E) is uniformly and finely dispersed in the polybutylene terephthalate resin (A). Here, in order to disperse the linear olefin resin (E) in the polybutylene terephthalate resin (A), it is required that the polybutylene terephthalate resin forming the matrix (sea) and the linear olefin resin (E) forming domain (island) in microstructure are close to each other in melt viscosity. Therefore, molecular weight of the linear olefin resin (E) should be decided from the melt viscosity of the polybutylene terephthalate resin (A) which behaves as the matrix, and the ratio of melt viscosity of the polybutylene terephthalate resin (A) to that of the linear polyolefin resin (E) ((A)/(E) ratio) at a temperature of 270°C and a shear rate of 1,000 $sec^{-1}$ should be preferably in the range of 0.3 to 2.0, more preferably 0.35 to 1.8.

The amount of the linear polyolefin resin (E) in the composition is 0 to 30 parts by weight, preferably 0.5 to 20 parts by weight based on 100 parts by weight of the polybutylene terephthalate resin (A). If its amount exceeds 30 parts by weight, there may take place release of this component from the molded product.

In the PBT resin composition of the present invention, an inorganic filler (F) may be incorporated as required. Addition of such an inorganic filler (F) is especially effective for the applications where specific rigidity, elasticity and/or dimensional stability are required.

As the inorganic filler (F) in the present invention, there can be used fibrous materials, lamellar materials, particulate materials and mixture thereof. Concretely, there are exemplified fibrous materials such as glass fiber, carbon fiber, mineral fiber, metal fiber, ceramic whisker and wollastonite, lamellar materials and/or phyllosilicates such as glass frakes, mica and talc, particulate materials such as silica, alumina, glass beads, carbon black and calcium carbonate, which are all well known in the art. The standard for selection of the filler is variable depending on the properties required for the product to possess, generally fibrous materials, especially glass fiber is selected for the products with high mechanical strength or rigidity, and lamellar materials, especially mica or talc is selected where it is required to reduce anisotropy or warpage of the molded product. The lamellar materials are preferably used as they often prove effective

for preventing drip in combustion. As for the particulate materials, the optimal one is selected by taking into consideration flowability in molding and total balance of performances of the product.

Phyllosilicates are also usable as the inorganic filler (F) in the present invention. Phyllosilicates can not only function as an inorganic filler but can also perform a secondary function as an anti-dripping agent (G) described later. Preferred examples of such phyllosilicates are smectic clay minerals such as montmorillonite and hectorite, and swelling synthetic micas such as Li-type fluorine taeniolite, Na-type fluorine and Na-type fluorine tetrasilicate mica.

Modified phyllosilicates (phyllosilicates having quaternary organic onium cations interposed between the layers), and phyllosilicates or modified phyllosilicates having attached thereto reactive functional groups such as epoxy group, amino group, oxazoline group, carboxyl group, acid anhydrides, etc., are preferably used in view of dispersibility in the resin composition and capability to preventing drip in combustion.

Examples of the quaternary onium cations interposed between the layers of the said modified phyllosilicates include trimethylalkylammoniums such as trimethyloctylammonium, trimethyldecylammonium, trimethyldodecylammonium, trimethyltetradecylammonium, trimethylhexadecylammonium and trimethyloctadecylammonium, and dimethyldialkylammoniums such as dimethyldioctylammonium, dimethyldidecylammonium, dimethyldidodecylammonium, dimethylditetraammonium, dimethyldihexadecylammonium and dimethyldioctadecylammonium.

Inorganic filler (F) is compounded in an amount of 0 to 200 parts by weight based on 100 parts by weight of PBT resin, which is decided according to the required level of rigidity and dimensional stability of the product. In case where flexibility of the product is an essential requirement, no inorganic filler may be incorporated, but when it is incorporated, its amount incorporated is usually 5 to 120 parts by weight, preferably 10 to 100 parts by weight. When its amount exceeds 200 parts by weight, mechanical strength of the molded product deteriorates.

In the present invention, one or two or more of the inorganic fillers such as mentioned above can be used. There are the cases where the type of the inorganic filler (F) to be selected differs according to the desired properties of the product, so that the fillers are preferably used in the following manner: for instance 4 to 119 parts by weight of glass fiber (F-1) and 116 to 1 part by weight of lamellar inorganic filler (F-2) are used so that the total of (F-1) and (F-2) will become 5 to 120 parts by weight.

An anti-dripping agent (G) may be contained in the composition for preventing dripping of the resin in combustion.

The anti-dripping agent (G) used in the present invention is a compound having a function to prevent dripping of resin during combustion. The compounds applied to the said inorganic fillers (F) are excluded. As typical examples of the agent (G), silicone oil, fluorine (or fluorine-containing) resins, etc., can be exemplified. Of these, fluorine (or fluorine-containing) resins are especially preferred in view of flame retardancy of the composition.

The fluorine (or fluorine-containing) resins usable as the anti-dripping agent (G) are, for instance, those whose number-average molecular weight is usually not less than 1,000,000, preferably not less than 2,000,000 as determined from the standard specific gravity (SSG) of the sample molded under the heat treatment conditions shown in ASTM D-1457-56T and a radioactive terminal group method or melt viscosity and a solution viscosity method at a high temperature and corrected. Examples of such resins are fluorinated polyolefins such as polytetrafluoroethylene, tetrafluoroethylene/perfluoroalkylvinyl ether copolymer, tetrafluoroethylene/hexafluoropropylene copolymer, tetrafluoroethylene/ethylene copolymer, vinylidene fluoride and polychlorotrifluoroethylene. Of these resins, polytetrafluoroethylene, tetrafluoroethylene/perfluoroalkylvinyl ether copolymer, tetrafluoroethylene/hexafluoropropylene copolymer and tetrafluoroethylene/ethylene copolymer are preferred, with polytetrafluoroethylene and tetrafluoroethylene/hexafluoropropylene copolymer being especially preferred.

The fluorine (or fluorine-containing) resins used as the anti-dripping agent (G) are preferably those having fibril forming properties. Such compounds are easily dispersed in the resins, with the polymers showing a tendency to combine with each other to make a fibrous material, and can function effectively as an anti-dripping agent.

Such fluorine (or fluorine-containing) resins are commercially available by the name of fine powder or molding powder and marketed under the trade names of, for example, "Polyflon FA-500", "Polyflon F-201L" and "Polyflon M-18" (produced by Daikin Industries, Ltd.), "Fluon CD-123" and "Fluon G-190" (produced by Asahi Glass Co., Ltd.), "Teflon (R) 6-J" and "Teflon (R) 7A-J" (produced by Mitsui Du Pont Fluorochemical Co., Ltd.), and "Dyneon TF-2071" and "Dyneon TF-1750" (produced by Dyneon Co., Ltd.).

Melt viscosity at 350°C of the fluorine (or fluorine-containing) resin used as the anti-dripping agent (G) is usually $1.0 \times 10^2$ to $1.0 \times 10^{15}$ (Pa·s), preferably $1.0 \times 10^3$ to $1.0 \times 10^{14}$ (Pa·s), more preferably $1.0 \times 10^{10}$ to $1.0 \times 10^{12}$ (Pa·s). When the melt viscosity is less than $1.0 \times 10^2$ (Pa·s), the anti-dripping effect during combustion is unsatisfactory, and when the melt viscosity is more than $1.0 \times 10^{15}$ (Pa·s), flowability of the composition is seriously deteriorated.

Silicone oil can be also preferably used as an anti-dripping agent (G). Such silicone oil comprises a compound having a dimethylpolysiloxane skeleton, and its terminal or a part or whole of its side chains may have been converted to the functional groups by undergoing amino modification, epoxy modification, carboxyl modification, carbinol modification, methacryl modification, mercapto modification, phenol modification, polyether modification, methylstylyl modification, alkyl modification, higher fatty acid ester modification, higher alkoxyl modification or fluorine modification.

Viscosity, at 25°C, of the silicone oil used as the anti-dripping agent (G) is usually 1,000 to 30,000 (cst.),

preferably 2,000 to 25,000 (cst.), more preferably 3,000 to 20,000 (cst.). If the viscosity is less than 1,000 (cst.), the anti-dripping action of the agent in combustion is insufficient, resulting in an unsatisfactory flame retardancy, while if the viscosity is more than 30,000 (cst.), flowability of the composition is reduced due to the thickening effect.

In the flame-retardant PBT resin composition according to the present invention, the content of the anti-dripping agent (G) is usually 0 to 15 parts by weight, preferably 0.01 to 15 parts by weight based on 100 parts by weight of PBT resin.

If the content of the anti-dripping agent (G) exceeds 15 parts by weight, there is a possibility of incurring decrease of flowability and a deterioration of mechanical properties.

In the present invention, among the polybutylene terephthalate resin compositions described above, those comprising:

(A) 100 parts by weight of a polybutylene terephthalate resin,
(B) 5 to 22.5 parts by weight of a bromine-based flame retardant,
(C) 5 to 20 parts by weight of at least one compound selected from antimony oxides and double salts of antimony oxides and other metals,
(D) 0.2 to 20 parts by weight of a glycidyl group-containing copolymer comprising an $\alpha$-olelfin and a glycidyl ester of an $\alpha,\beta$-unsaturated acid,
(E) 0.5 to 20 parts by weight of a linear olefin resin having a molecular weight of 10,000 to 1,000,000, and
(F) 5 to 120 parts by weight of an inorganic filler, are preferably used.

In the said resin compositions according to the present invention, in addition to the said components (A)-(G), it is possible to incorporate, as required, various known additives within limits not affecting the properties of the said resin compositions. Examples of such additives are release agents such as paraffin wax, polyethylene wax, fatty acids (such as stearic acid) and their salts or esters, and silicone oil; thermal stabilizers such as hindered phenol-based, phosphorous ester-based and sulfur-containing ester compound-based; crystallization accelerators; ultraviolet absorbers or weathering resistance imparting agents; dyes, pigments, and foaming agents.

The compositions may also contain various types of nylon such as nylon 6, nylon 66, nylon 12 and nylon MXD6, and so on, various types of nylon elastomer, liquid crystal polymers, polycarbonate resins, polyester resins other than PBT resin (such as polyethylene terephthalate and polybutylene naphthalate), styrene-based resins such as polystyrene, ABS, AS and MS, various types of acrylic resin, fluorine-based resins such as polytetrafluoroethylene, various types of elastomer such as isobutyrene-isoprene rubber, styrene-butadiene rubber, styrene-butadiene rubber-styrene, ethylene-propylene rubber and acrylic elastomers, ionomer resins, and thermosetting resins such as phenoxy resins, polycarproractam, phenol resins, melamine resins, silicone resins and epoxy resins. Further, in order to prevent corrosion at the contacts, small quantities of a polyhydric alcohol or a derivative thereof, hydrotalcite type compound, epoxy compound or the like may be contained in the compositions.

The polybutylene terephthalate resin composition used as the base material of the insulating parts according to the present invention can be obtained by compounding and kneading the said components (A)-(G) and, if necessary, various additives such as mentioned above. Compounding can be accomplished by the commonly used means such as ribbon blender, Henschel mixer, drum blender, etc. For melt kneading, various types of extruder, Brabender Plastograph, Labo-plastomill, kneader, Banbury mixer and the like can be used. The heating temperature for melt kneading is usually 230 to 290°C. A thermal stabilizer such as mentioned above is preferably used for inhibiting decomposition from taking place during kneading. The components, including the additive ones, can be supplied all at one time or one after another successively to the kneading machine. Also, two or more of the components may be mixed previously. The fibrous inorganic fillers such as glass fiber are added at a halfway point of the extruder after the resin has been melted, so as to avoid breaking of the fibers and allow them to exhibit their advantageous properties.

The insulating parts of the present invention have a resin molded portion comprising the said flame-retardant PBT resin composition, the said resin molded portion either directly supporting a connection through which an electric current exceeding 0.2 A (a rated current exceeding 0.2 A) flows during the normal operations or positioned within the distance of 3 mm from such a connection. Thus, the resin molded portion formed by using a flame-retardant PBT resin composition such as mentioned above can realize high GWFI and GWIT ratings and is also capable of satisfying the requirements for flame retardancy under UL standard (V-0), PTI, etc.

Here, the expression "the said resin molded portion is positioned within the distance of 3 mm from the connection through which an electric current exceeding 0.2 A flows during the normal operations" means that, for instance, in the case of a relay part, the resin molded portion does not directly support the connection (contact) in an internally contacted state but a spacing of several millimeters is provided between the resin molded portion and the contact. In such a case, also, high electrical safety is needed and the present invention is useful therefor.

The insulating parts of the present invention can be obtained by molding the above said frame-retardant PBT resin composition by various known molding methods such as injection molding, blow molding, extrusion molding, compression molding, calender molding and rotational molding. Injection molding is particularly preferred because of

good flowability. In carrying out injection molding, the resin temperature is preferably controlled at 240 to 280°C.

The insulating parts according to the present invention, by combining therewith metal contacts, copper plates, etc., can be worked into a variety of electric and electronic parts such as relays, switches, connectors, sensors, actuators, microsensors, micro-actuators, and so on.

The insulating parts for the electric and electronic apparatus according to the present invention are improved in resistance against ignition and propagation of flames during operation of the apparatus. The present invention also provides improvement of safety of the insulating parts for the apparatus operated without attendance of an operator, which insulating parts support the connections through which an electric current exceeding 0.2 A, or a rated current exceeding 0.2 A, flows during the normal operations of the apparatus, or positioned within the distance of 3 mm from such connections. Thus the present invention finds a wide scope of applications.

[Base materials]

<u>Polybutylene terephthalate resin:</u>

(A) Polybutylene terephthalate resin (trade name: NOVADURAN® produced by Mitsubishi Engineering-Plastics Corporation grade number: 5007, intrinsic viscosity [η] = 0.70, melt viscosity measured at 270°C and 1,000 $sec^{-1}$: 33 Pa·s)

<u>Halogen based-organic flame retardants:</u>

(B-1) Polypentabromobenzyl acrylate (trade name: PBBPA-FR1025, produced by Bromochem Far East Co., Ltd.)
(B-2) Tetrabromobisphenol A-tetrabromobisphenol A diglycidyl ether copolymer (trade name: SR-T5000 produced by Sakamoto Chemical Industries Co., Ltd.)
(B-3) Brominated polycarbonate oligomer (trade name: FR-53 produced by Mitsubishi Gas Chemical Company, Inc.)

<u>Antimony compounds:</u>

(C-1) Double salt of sodium oxide and antimony pentoxide (n = 1) (trade name: Sunepoch NA-1070L produced by Nissan Chemical Industries, Ltd.)
(C-2) Double salt of sodium oxide and antimony pentoxide (n = 0.7) (trade name: Sunepoch NA-1030 produced by Nissan Chemical Industries, Ltd.)
(C-3) Antimony trioxide (produced by Moriroku Company, Ltd.)

<u>Glycidyl group-containing ethylene-based copolymers:</u>

(D-1) Trade name: Bondfast 2C (ethylene-glycidyl methacrylate copolymer) produced by Sumitomo Chemical Co., Ltd.

(D-2) Trade name: Bondfast 7M (ethylene-glycidyl methacrylate-methyl acrylate copolymer) produced by Sumitomo Chemical Co., Ltd.

<u>Linear polyolefin:</u>

(E) Trade name: NOVATECH® HD produced by Japan Polychem Corporation, grade number: HJ490, density: 0.958 g/cc, viscosity-average molecular weight (ASTM D2857): 36,000, melt viscosity measured at 270°C and 1,000 $sec^{-1}$: 90 Pa·s

Inorganic fillers:

(F-1) Glass fiber (trade name: T187 produced by Nippon Electric Glass Co., Ltd.)
(F-2) Talc (trade name: TALCAN PAWDER® PK-C produced by Hayashi Kasei Co., Ltd.)

Anti-dripping agent:

(G) Polytetrafluoroethylene (PTFE) (trade name: Polyflon M-18 produced by Daikin Industries Ltd., molecular weight: 8,000,000)

[Performance evaluation methods]

(1) Flame retardancy test

An UL-94 standard vertical flame test was conducted on the UL test pieces (1/32 inch thick). The flame retardancy level was rated according to the above standard:

$$V-0 > V-1 > V-2.$$

(2) PTI test

PTI (proof tracking index) of the test pieces (3 mm thick plates) was determined by the International Standard IEC. 60112 test method. This PTI is numeral value of the proof voltage which is an integer multiple of 25V. PTI indicates track resistance under voltages between 100V and 600 V when the test piece (a solid electric insulating material) was wet contaminated in a state where an electric field was applied to its surface.

(3) GWFI test

This GWFI (Glow-Wire Flammability) test was conducted on the test pieces (3 mm thick plates) according to the IEC60695-2-12 test method. A glow wire of a predetermined configuration (a loop of nickel/chromium (80/20) wire with an outer diameter of 4 mm) was brought into contact with a test piece for 30 seconds and then separated. GWFI is defined as the highest temperature of the wire end at which the wire remains unignited throughout this period or, even if it is ignited, the fire is extinguished within 30 seconds after separation. The test was conducted up to 960°C. GWFI of not lower than 850°C is required for the flame-retarding applications.

(4) GWIT test

The GWIT (Glow-Wire Ignition Temperature) test was conducted on the test pieces (3 mm thick plates) according to the IEC60695-2-13 test method. A glow wire of a predetermined configuration (a loop of nickel/chromium (80/20) wire with an outer diameter of 4 mm) was brought into contact with a test piece for 30 seconds. GWIT is defined as a temperature which is 25°C higher than the highest temperature of the wire end at which the wire is not ignited. GWIT of not lower than 775°C is required for the flame-retarding applications.

(5) Tensile test

Using the ISO tensile test pieces (ISO3167), tensile strength was measured according to ISO527.

(5) Flexural test

Using the ISO tensile test pieces (ISO3167), flexural strength was measured according to ISO178.

Example 1

100 parts by weight of PBT resin (A), 14.4 parts by weight of bromine-based flame retardant (B-1), 9 parts by weight of antimony compound (C-1), 5 parts by weight of glycidyl group-containing copolymer (D-1), 5 parts by weight of linear olefin resin (E), 4 parts by weight of talc (F-2) and 1 part by weight of anti-dripping agent (G) were mixed together by a super-mixer (Model SK-350 mfd. by Shinei-Kikai Seisakusho Co., Ltd.), then supplied to a hopper of a double-screw extruder with L/D = 42 (TEX30HSST mfd. by Japan Steel Works, Ltd.) and, after side-feeding 60 parts by weight of glass fiber (F-1), extruded under the conditions of: discharging rate = 20 kg/h, screw speed = 150 rpm, barrel temperature = 260°C to obtain the pellets of a PBT resin composition.

These pellets were molded into the test pieces for the above items (1) - (4) (10 cm X 10 cm X 3 mm thick plate test pieces and 1/32 inch UL-94 standard test pieces) by an injection molding machine (Model SH-100 mfd. by Sumitomo Heavy Industries Ltd.) at a cylinder temperature of 250°C and a mold temperature of 80°C. As the test pieces for (5) and (6), the ISO tensile test pieces (ISO3167) were molded by an injection molding machine (Model S-75 MIII mfd. by Sumitomo Heavy Industries, Ltd.) at 250°C.

Using these test pieces, evaluations were made on the said items.

Examples 2, 5 to 7 and 9, comparative examples 1 to 3 and reference examples 3, 4, 8 and 10.

The PBT resin compositions were prepared and the test pieces were made therefrom in the same way as in Example 1 except that the components and formulations were changed as shown in Table 1, and evaluations were made in the same way as in Example 1.

Table 1

| | Example | | | | |
|---|---|---|---|---|---|
| | 1 | 2 | 3* | 4* | 5 |
| Formulation (wt parts) | | | | | |
| (A) PBT resin | 100 | 100 | 100 | 100 | 100 |
| (B) Bromine-based flame retardant | | | | | |
| (B-1) | 14.4 | 14.4 | 14.4 | 14.4 | - |
| (B-2) | - | - | - | - | 14.4 |
| (B-3) | - | - | - | - | - |
| (C) Antimony oxide | | | | | |
| (C-1) | 9 | 9 | 9 | 9 | 9 |
| (C-2) | - | - | - | - | - |
| (C-3) | - | - | - | - | - |
| (D) Glycidyl group-containing copolymer | | | | | |
| (D-1) | 5 | - | 10 | 5 | 5 |
| (D-2) | - | 5 | - | - | - |
| (E) Linear olefin resin | 5 | 5 | - | - | 5 |
| (F) Inorganic filler | | | | | |
| (F-1) | 60 | 60 | 60 | 60 | 60 |
| (F-2) | 4 | 4 | 4 | 4 | 4 |
| (G) Anti-dripping agent | 1 | 1 | 1 | 1 | 1 |
| Results | | | | | |
| Flame retardancy | V-0 | V-0 | V-0 | V-0 | V-0 |
| PTI (volts) | 300 | 300 | 300 | 300 | 250 |
| GWFI (°C) | 960 | 960 | 960 | 960 | 960 |
| GWIT (°C) | 900 | 900 | 875 | 850 | 900 |
| Tensile strength (Mpa) | 118 | 117 | 116 | 119 | 115 |
| Flexural strength (MPa) | 185 | 184 | 182 | 194 | 181 |

* reference examples

Table 1 (Continued)

| | Example | | | | |
|---|---|---|---|---|---|
| | 6 | 7 | 8* | 9 | 10 * |
| Formulation (wt parts) | | | | | |
| (A) PBT resin | 100 | 100 | 100 | 100 | 100 |
| (B) Bromine-based flame retardant | | | | | |
| (B-1) | - | 14.4 | 14.4 | 14.4 | 14.4 |
| (B-2) | - | - | - | - | - |
| (B-3) | 14.4 | - | - | - | - |
| (C) Antimony oxide | | | | | |
| (C-1) | 9 | - | - | 9 | 9 |
| (C-2) | - | 9 | - | - | - |
| (C-3) | - | - | 9 | - | - |
| (D) Glycidyl group-containing copolymer | | | | | |
| (D-1) | 5 | 5 | 5 | 5 | 5 |
| (D-2) | - | - | - | - | - |
| (E) Linear olefin resin | 5 | 5 | 5 | 5 | 5 |
| (F) Inorganic filler | | | | | |
| (F-1) | 60 | 60 | 60 | 60 | - |
| (F-2) | 4 | 4 | 4 | 4 | - |
| (G) Anti-dripping agent | 1 | 1 | 1 | - | 1 |
| Results | | | | | |
| Flame retardancy | V-0 | V-0 | V-0 | V-0 | V-2 |
| PTI (volts) | 250 | 275 | 275 | 300 | 300 |
| GWFI (°C) | 960 | 960 | 960 | 960 | 960 |
| GWIT (°C) | 900 | 875 | 850 | 900 | 850 |
| Tensile strength (Mpa) | 114 | 115 | 119 | 116 | 54 |
| Flexural strength (MPa) | 179 | 183 | 189 | 183 | 90 |

* reference example

Table 1 (Continued)

| | Comparative Example | | |
|---|---|---|---|
| | 1 | 2 | 3 |
| Formulation (wt parts) | | | |
| (A) PBT resin | 100 | 100 | 100 |
| (B) Bromine-based flame retardant | | | |
| (B-1) | 13 | 14.4 | 14.4 |
| (B-2) | - | - | - |
| (B-3) | - | - | - |
| (C) Antimony oxide | | | |
| (C-1) | 8.1 | 9 | 9 |
| (C-2) | - | - | - |
| (C-3) | - | - | - |
| (D) Glycidyl group-containing copolymer | | | |
| (D-1) | - | - | - |
| (D-2) | - | - | - |
| (E) Linear olefin resin | - | 10 | 10 |
| (F) Inorganic filler | | | |
| (F-1) | 54 | 60 | - |
| (F-2) | 4 | 4 | - |
| (G) Anti-dripping agent | 1 | 1 | 1 |
| Results | | | |
| Flame retardancy | V-0 | V-0 | V-2 |
| PTI (volts) | 250 | 275 | 250 |
| GWFI (°C) | 960 | 960 | 960 |
| GWIT (°C) | 825 | 825 | 775 |
| Tensile strength (Mpa) | 123 | 98 | 48 |
| Flexural strength (MPa) | 191 | 158 | 89 |

(1) As seen from Table 1, Examples 1 to 2 and reference examples 3 to 4 are superior in PTI and GWIT and equal in GWFI and mechanical properties to Comparative Example 1 in which both of (D) and (E) are not contained. (The compositions used in the tests are the same except for (D) and (E), with the flame retardant and auxiliary being blended in the same rates to the resin.)

(2) As seen from Table 1, Examples 5 to 7 and 9 and reference example 8 are equal or superior to Comparative Example 1 in flame retardancy, PTI, GWFI and mechanical properties even though the flame retardant and auxiliary are different from those of Comparative Example 1. Examples 5 to 7 and 9 and reference example 8 also excel in GWIT.

(3) As seen from Table 1, in comparison between Examples 1 to 2 and reference examples 3 and 4 and Comparative Example 2, the latter in which no glycidyl group-containing copolymer (D) is blended and only a linear polyolefin resin (E) is contained is inferior in PTI, GWIT and mechanical properties. (The same flame retardant and the same auxiliary are used.)

(4) As seen from Table 1, in comparison between Examples 5 to 7 and to 9 and reference example 8 and Comparative Example 2, the former (Examples 5 to 7 and 9 and reference example 8) is equal or superior to the latter (Comparative

Example 2) in flame retardancy, PTI, GWFI and mechanical properties while the former excels in GWIT.

(5) As seen from Table 1, in comparison between reference example 10 and Comparative Example 3, those are the system using no inorganic filler (F), and reference example 10 is superior in PTI and GWIT and equal in flame retardancy, GWFI and mechanical properties to Comparative Example 3 where no glycidyl group-containing copolymer (D) is used.

As seen from Examples 1 to 2, 5 to 7 and 9 and reference examples 3 to 4, 8 and 10 shown in Table 1, the products of the present invention excel in flame retardancy, PTI, GWFI, GWIT and mechanical properties, and can be adapted to the IEC60335-1 standard insulating parts supporting the connections through which an electric current exceeding 0.2 A flows during the normal operations or those positioned within the distance of 3 mm from these connections.

As explained above, the molded products according to the present invention can be applied to the parts of household electric appliances such as refrigerator, full-automatic washer, etc., which are operated without attendance of an operator, namely the insulating parts supporting the connections through which an electric current exceeding 0.2 A flows during the normal operations and the electric insulating parts (printed circuit boards, terminal blocks, plugs, etc.) positioned within the distance of 3 mm from the connections, and these products are improved in electrical safety. As the molded products according to the present invention thus have excellent flame retardancy and improved electrical safety, they can be utilized in the fields of electric and electronic apparatus, automobiles, machinery, etc.

## Claims

1. An insulating part having a resin molded portion comprising a polybutylene terephthalate resin composition comprising:

   (A) 100 parts by weight of a polybutylene terephthalate resin,
   (B) 3 to 50 parts by weight of a bromine-based flame retardant,
   (C) 1 to 30 parts by weight of at least one compound selected from antimony pentoxide or double salts of antimony pentoxide and other metal oxides,
   (D) 0.1 to 30 parts by weight of a glycidyl group-containing copolymer comprising an $\alpha$-olefin and an $\alpha,\beta$-unsaturated acid glycidyl ester,
   (E) 0.5 to 30 parts by weight of a linear olefin resin having a molecular weight of 10,000 to 1,000,000, and
   (F) 5 to 200 parts by weight of an inorganic filler, said resin molded portion directly supporting the connections through which a rated electric current exceeding 0.2 A flows or positioned within the distance of 3 mm from the said connections.

2. An insulating part according to claim 1, wherein the polybutylene terephthalate resin composition comprises:

   (A) 100 parts by weight of a polybutylene terephthalate resin,
   (B) 5 to 22.5 parts by weight of a bromine-based flame retardant,
   (C) 5 to 20 parts by weight of at least one compound selected from antimony pentoxide or double salts of antimony pentoxide and other metal oxides,
   (D) 0.2 to 20 parts by weight of a glycidyl group-containing copolymer comprising an $\alpha$-olefin and an $\alpha,\beta$-unsaturated acid glycidyl ester,
   (E) 0.5 to 20 parts by weight of a linear olefin resin having a molecular weight of 10,000 to 1,000,000, and
   (F) 5 to 120 parts by weight of an inorganic filler.

3. An insulating part according to claim 1 or 2, wherein the bromine-based flame retardant is polybrominated benzyl (meth)acrylate.

4. An insulating part according to any one of claims 1 to 3, wherein double salts of antimony pentoxide and other metal oxides are represented by the following formula (1) or (2);

$$n(X_2O)\cdot Sb_2O_5\cdot m(H_2O) \qquad (1)$$

$$n(YO)\cdot Sb_2O_5\cdot m(H_2O) \qquad (2)$$

   wherein X is a monovalent alkaline metal element, Y is a divalent alkaline earth metal element, n is a number of 0

to 1.5, and m is a number of 0 to 4, with m and n being decided independently in the respective chemical formulae (1) and (2).

**5.** An insulating part according to any one of claims 1 to 4, wherein double salts of antimony pentoxide and other metal oxides are represented by the following formula (3) :

$$n(Na_2O)\cdot Sb_2O_5 \qquad (3)$$

wherein n is a number of 0.65 to 1.5.

**6.** An insulating part according to claim 2, wherein the polybutylene terephthalate resin (A)/linear polyolefin resin (E) ratio of melt viscosity at 270°C and a shear rate of 1,000 $sec^{-1}$ is 0.3 to 2.0.

**7.** An insulating part according to any one of claims 1 to 6, wherein the polybutylene terephthalate resin composition further comprises an anti-dripping agent (G) in an amount of 0.01 to 15 parts by weight based on 100 parts by weight of polybutylene terephthalate resin (A).

**8.** An insulating part according to any one of claims 1 to 7, wherein the inorganic filler (F) comprises 4 to 119 parts by weight of glass fiber (F-1) and 116 to 1 part by weight of a lamellar inorganic filler (F-2), the total of (F-1) and (F-2) being 5 to 120 parts by weight.

**9.** An insulating part according to any one of claims 1 to 8, wherein GWFI (Glow-Wire Flammability) according to the IEC60695-2-12 is not lower than 960°C and GWIT (Glow-Wire Ignition Temperature) according to the IEC60695-2-13 is not lower than 900°C both on the test pieces of 10 cm X 10 cm X 3 mm plates comprising the polybutylene terephthalate resin composition.

**Patentansprüche**

**1.** Isolationsteil mit einem harzgeformten Bereich, umfassend eine Polybutylenterephthalat-Harzzusammensetzung, umfassend:

(A) 100 Gew.Teile eines Polybutylenterephthalatharzes,
(B) 3 bis 50 Gew.Teile eines flammwidrigen Mittels auf Brombasis,
(C) 1 bis 30 Gew.Teile von zumindest einer Verbindung, ausgewählt aus Antimonpentoxid oder Doppelsalzen von Antimonpentoxid und anderen Metalloxiden,
(D) 0,1 bis 30 Gew.Teile eines Glycidylgruppen-haltigen Copolymers, umfassend ein $\alpha$-Olefin und einen $\alpha,\beta$-ungesättigten Säureglycidylester,
(E) 0,5 bis 30 Gew.Teile eines linearen Olefinharzes mit einem Molekulargewicht von 10.000 bis 1.000.000 und
(F) 5 bis 200 Gew.Teile eines anorganischen Füllstoffs,

wobei der harzgeformte Bereich direkt die Verbindungen trägt, durch die ein bestimmter elektrischer Strom von mehr als 0,2 A fließt oder innerhalb des Abstandes von 3 mm von den Verbindungen positioniert ist.

**2.** Isolierteil nach Anspruch 1, worin die Polybutylenterephthalat-Harzzusammensetzung umfaßt:

(A) 100 Gew.Teile eines Polybutylenterephthalatharzes,
(B) 5 bis 22,5 Gew.Teile eines flammwidrigen Mittels auf Brombasis,
(C) 5 bis 20 Gew.Teile aus zumindest einer Verbindung, ausgewählt aus Antimonpentoxid oder Doppelsalzes von Antimonpentoxid und anderen Metallsalzen,
(D) 0,2 bis 20 Gew.Teile eines Glycidylgruppen-haltigen Copolymers, umfassend ein $\alpha$-Olefin und einen $\alpha,\beta$-ungesättigten Säureglycidylester,
(E) 0,5 bis 20 Gew.Teile eines linearen Olefinharzes mit einem Molekulargewicht von 10.000 bis 1.000.000 und
(F) 5 bis 120 Gew.Teile eines anorganischen Füllstoffs.

**3.** Isolationsteil nach Anspruch 1 oder 2, worin das flammwidrige Mittel auf Brombasis polybromiertes Benzyl(meth) acrylat ist.

**4.** Isolationsteil nach einem der Ansprüche 1 bis 3, worin die Doppelsalze von Antimonpentoxid und anderen Metalloxiden durch die folgende Formel (1) oder (2) dargestellt sind:

$$n(X_2O)\cdot Sb_2O_5\cdot m(H_2O) \quad (1)$$

$$n(YO)\cdot Sb_2O_5\cdot m(H_2O) \quad (2)$$

worin X ein monovalentes Alkalimetallelement ist, Y ein bivalentes Erdalkalimetallelement ist, n eine Zahl von 0 bis 1,5 ist und m eine Zahl von 0 bis 4 ist, wobei m und n unabhängig in den jeweiligen chemischen Formeln (1) und (2) bestimmt sind.

**5.** Isolationsteil nach einem der Ansprüche 1 bis 4, worin Doppelsalze von Antimonpentoxid und anderen Metalloxiden durch die folgende Formel (3) dargestellt sind:

$$n(Na_2O)\cdot Sb_2O_5 \quad (3)$$

worin n eine Zahl von 0,65 bis 1,5 ist.

**6.** Isolationsteil nach Anspruch 2, worin das Verhältnis der Schmelzviskosität des Polybutylenterephthalatharzes (A) /linearen Polyolefinharzes (E) bei 270°C und einer Scherrate von 1.000 $s^{-1}$ 0,3 bis 2,0 ist.

**7.** Isolationsteil nach einem der Ansprüche 1 bis 6, worin die Polybutylenterephthalat-Harzzusammensetzung weiterhin ein Antitropfmittel (G) in einer Menge von 0,01 bis 15 Gew.Teilen, bezogen auf 100 Gew.Teile des Polybutylenterephthalatharzes (A), umfaßt.

**8.** Isolationsteil nach einem der Ansprüche 1 bis 7, worin der anorganische Füllstoff (F) 4 bis 119 Gew.Teile Glasfaser (F-1) und 116 bis 1 Gew.Teile eines lamellaren anorganischen Füllstoffes (F-2) umfaßt, wobei die Gesamtmenge von (F-1) und (F-2) 5 bis 120 Gew.Teile ist.

**9.** Isolationsteil nach einem der Ansprüche 1 bis 8, worin GWFI (Glow-Wire Flammability) gemäß IEC60695-2-12 nicht niedriger als 960°C ist und GWIT (Glow-Wire Ignition Temperature) gemäß IEC60695-2-13 nicht niedriger als 900°C jeweils bei Teststücken von 10 cm x 10 cm x 3 mm Platten, umfassend die Polybutylenterephthalat-Harzzusammensetzung, ist.

**Revendications**

**1.** Pièce isolante comportant une partie moulée de résine comprenant une composition de résine de poly téréphtalate de butylène comprenant :

(A) 100 parties en poids d'une résine de poly téréphtalate de butylène,
(B) 3 à 50 parties en poids d'un ignifugeant à base de brome,
(C) 1 à 30 parties en poids d'au moins un composé choisi parmi le pentoxyde d'antimoine ou les sels doubles de pentoxyde d'antimoine et d'autres oxydes métalliques,
(D) 0,1 à 30 parties en poids d'un copolymère contenant un groupe glycidyle comprenant une $\alpha$-oléfine et un ester glycidylique d'acide $\alpha,\beta$-insaturé,
(E) 0,5 à 30 parties en poids d'une résine oléfinique linéaire ayant une masse moléculaire de 10 000 à 1 000 000, et
(F) 5 à 200 parties en poids d'une charge inorganique, ladite partie moulée de résine supportant directement les connexions traversées par un courant électrique normal dépassant 0,2 A ou étant placée à moins de 3 mm desdites connexions.

**2.** Pièce isolante selon la revendication 1, dans laquelle la composition de résine de poly téréphtalate de butylène comprend :

(A) 100 parties en poids d'une résine de poly téréphtalate de butylène,
(B) 5 à 22,5 parties en poids d'un ignifugeant à base de brome,
(C) 5 à 20 parties en poids d'au moins un composé choisi parmi le pentoxyde d'antimoine ou les sels doubles de pentoxyde d'antimoine et d'autres oxydes métalliques,

(D) 0,2 à 20 parties en poids d'un copolymère contenant un groupe glycidyle comprenant une α-oléfine et un ester glycidylique d'acide α,β-insaturé,

(E) 0,5 à 20 parties en poids d'un résine oléfinique linéaire ayant une masse moléculaire de 10 000 à 1 000 000, et

(F) 5 à 120 parties en poids d'une charge inorganique.

**3.** Pièce isolante selon la revendication 1 ou 2, dans laquelle l'ignifugeant à base de brome est du méthacrylate de benzyle polybromé.

**4.** Pièce isolante selon l'une quelconque des revendications 1 à 3, dans laquelle les sels doubles de pentoxyde d'antimoine et d'autres oxydes métalliques sont représentés par la formule (1) ou (2) suivante :

$$n(X_2O).Sb_2O_5.m(H_2O) \qquad (1)$$

$$n(YO).Sb_2O_5.m(H_2O) \qquad (2)$$

formules dans lesquelles X est un élément métallique alcalin monovalent, Y est un élément métallique alcalino-terreux divalent, n est un nombre de 0 à 1,5, et m est un nombre de 0 à 4, m et n étant définis indépendamment dans les formules chimiques respectives (1) et (2).

**5.** Pièce isolante selon l'une quelconque des revendications 1 à 4, dans laquelle les sels doubles de pentoxyde d'antimoine et d'autres oxydes métalliques sont représentés par la formule (3) suivante :

$$n(Na_2O)Sb_2O_5 \qquad (3)$$

dans laquelle n est un nombre de 0,65 à 1,5.

**6.** Pièce isolante selon la revendication 2, dans laquelle le rapport des indices de viscosité à chaud à 270°C entre la résine de poly téréphtalate de butylène (A) et la résine de polyoléfine linéaire (E) et à un taux de cisaillement de 1 000 $s^{-1}$ est de 0,3 à 2,0.

**7.** Pièce isolante selon l'une quelconque des revendications 1 à 6, dans laquelle la composition de résine de poly téréphtalate de butylène comprend en outre un agent anti-goutte (G) à raison de 0,01 à 15 parties en poids pour 100 parties en poids de résine de poly téréphtalate de butylène (A).

**8.** Pièce isolante selon l'une quelconque des revendications 1 à 7, dans laquelle la charge inorganique (F) comprend 4 à 119 parties en poids de fibre de verre (F-1) et 116 à 1 partie en poids d'une charge inorganique lamellaire (F-2), le total de (F-1) et (F-2) étant de 5 à 120 parties en poids.

**9.** Pièce isolante selon l'une quelconque des revendications 1 à 8, dans laquelle le GWFI (indice d'inflammabilité au fil incandescent) selon la norme IEC60695-2-12 n'est pas inférieur à 960°C et la GWIT (température d'inflammation d'un fil incandescent) selon la norme IEC60695-2-13 n'est pas inférieure à 900°C, tous deux mesurés sur des éprouvettes de plaques de 10 cm x 10 cm x 3 mm comprenant la composition de résine de poly téréphtalate de butylène.